# EUROPÄISCHE PATENTSCHRIFT

(11) **EP 1 837 141 B1**
(45) Veröffentlichungstag und Bekanntmachung des Hinweises auf die Patenterteilung: **19.06.2013**
(21) Anmeldenummer: 07000404.9
(22) Anmeldetag: 10.01.2007
(51) Int. Cl.: B27B 5/065, B27B 27/08, B23D 47/02, B23D 47/04

(54) **Sägeeinrichtung**
Sawing device
Dispositif de coupe

(30) Priorität: 21.03.2006 DE 102006013264
(43) Veröffentlichungstag der Anmeldung: 26.09.2007
(73) Patentinhaber: HOLZMA Plattenaufteiltechnik GmbH, 75365 Calw-Holzbronn (DE)
(72) Erfinder: Hartmann, Gerhard, 72224 Ebhausen-Rotfelden (DE)
(74) Vertreter: Dreiss

(56) Entgegenhaltungen:
- WO-A-02/26452

## Beschreibung

Die Erfindung betrifft eine Sägeeinrichtung nach dem Oberbegriff des Anspruchs 1.

Die EP 1 362 676 A1 offenbart eine Sägeeinrichtung mit Anschlägen. Deren zweiter Anschlag ist an einer Vorschubvorrichtung befestigt und greift an einem Eck eines plattenförmigen Werkstücks, welches aufgeteilt werden soll, an. Der erste Anschlag ist als Schwert ausgebildet, welches mit dem Sägewagen verbunden ist und in einer Arbeitsstellung nach oben über die Ebene des Auflagetisches übersteht. Durch den seitlichen Versatz zwischen dem ersten Anschlag und dem zweiten Anschlag und durch den Abstand, in Vorschubrichtung gesehen, zwischen dem ersten Anschlag und dem zweiten Anschlag, wird eine Schräglage des Werkstücks, welches aufgeteilt werden soll, definiert, die einem gewünschten Winkel entspricht.

Eine Sägeeinrichtung gemäß dem Oberbegriff des Anspruchs 1 ist der WO 02/26 452 zu entnehmen.

WO 02/26452 beschreibt eine Plattenaufteilsäge mit einer winkeleinstellbaren Anlagevorrichtung. Diese umfasst einen mit einem Tisch verfahrbaren ersten Anschlag und einen durch einen fixen Bolzen gebildeten zweiten Anschlag.

Aufgabe der vorliegenden Erfindung ist es, eine Sägeeinrichtung der eingangs genannten Art zu schaffen, welche möglichst einfach baut und preiswert hergestellt werden kann. Sie soll darüber hinaus einfach betrieben werden können.

Diese Aufgabe wird durch eine Sägeeinrichtung mit den Merkmalen des Anspruchs 1 gelöst. Vorteilhafte Weiterbildungen der Erfindung sind in Unteransprüchen angegeben.

Bei der erfindungsgemäßen Sägeeinrichtung ist der zweite Anschlag am Auflagetisch befestigt, also gegenüber dem Auflagetisch "stationär". Daher baut eine Vorschubvorrichtung der erfindungsgemäßen Sägeeinrichtung einfacher, was die Herstellkosten senkt. Darüber hinaus baut ein solcher stationärer Anschlag einfacher, und er kann von einem Benutzer der Sägeeinrichtung einfacher angewendet werden. Eine aufwändige Programmierung bzw. Positionierung der Vorschubvorrichtung ist für die Durchführung eines schräg verlaufenden Schnittes nicht mehr erforderlich. Die Handhabung und Bedienung der erfindungsgemäßen Sägeeinrichtung ist daher einfach. Ferner ist der Auflagetisch ein massives Teil, welches eine sichere Positionierung des zweiten Anschlags gewährleisten kann. Hierdurch wird die Vorschubvorrichtung der Sägeeinrichtung entlastet.

Die Sägeeinrichtung ist außerdem leicht bedienbar, robust und kostengünstig herstellbar.

Durch die Vielzahl von Aufnahmeöffnungen kann die erfindungsgemäße Sägeeinrichtung für Werkstücke ganz unterschiedlicher Größe und ganz unterschiedlicher geometrischer Gestalt eingesetzt werden.

Vorteil der Sägeeinrichtung nach Anspruch 2 ist, dass ein seitlicher Rand eines Werkstücks präzise und ohne die Gefahr von Beschädigungen an den zweiten Anschlag angelegt werden kann.

Wird die Sägeeinrichtung gemäß Anspruch 3 ausgestaltet, kann der Anlegeabschnitt einen größeren Durchmesser haben als der Befestigungsabschnitt, was das Risiko von Beschädigungen am Werkstück nochmals senkt.

Ist die Sägeeinrichtung gemäß Anspruch 4 ausgebildet, kann die im Auflagetisch vorhandene Aufnahmeöffnung für unterschiedliche Zwecke eingesetzt werden. Eine solche Sägeeinrichtung ist daher besonders flexibel. Das erfindungsgemäß vorgesehene Zwischenstück hat die Funktion eines Adapterelements.

Vor allem dann, wenn das Zwischenstück bündig mit der Oberseite des Auflagetisches angeordnet ist, verbessert die Sägeeinrichtung gemäß Anspruch 5 die Handhabung. Die Zeit, die zum Umrüsten einer solchen Sägeeinrichtung erforderlich ist, ist dann besonders kurz.

Vorteil der Weiterbildung gemäß Anspruch 6 ist eine nochmalige Reduzierung des Beschädigungsrisikos einer seitlichen Kante eines Werkstücks, welches am Anlegeabschnitt anliegt und verschoben wird.

Die Zusatzkosten, die für die Befestigung des zweiten Anschlags am Auflagetisch aufzuwenden sind, sind bei der Weiterbildung gemäß Anspruch 7 minimal, da als Aufnahmeöffnungen die bei üblichen Auflagetischen ohnehin vorhandenen Aufnahmeöffnungen für Trageinrichtungen, beispielsweise Kugellager und/oder Luftkissenlager, verwendet werden.

Bei der Sägeeinrichtung gemäß Anspruch 9 können kurze Taktzeiten realisiert werden, was die Wirtschaftlichkeit der Sägeeinrichtung erhöht.

Vorteil der Sägeeinrichtung gemäß Anspruch 10 ist, dass das Risiko von Fehlschnitten reduziert wird. In die gleiche Richtung zielt die Sägeeinrichtung gemäß Anspruch 11.

Die Durchführung des eigentlichen Sägeschnittes wird durch eine Sägeeinrichtung mit den Merkmalen des Anspruchs 12 erleichtert, die Genauigkeit beim eigentlichen Sägevorgang erhöhen.

Eine Sägeeinrichtung mit den Merkmalen des Anspruchs 13 kann sehr variabel eingesetzt werden, da der erste Anschlag in der Freigabestellung die Positionierung des Werkstücks auf dem Auflagetisch nicht beeinträchtigen kann.

Die Kosten für die Herstellung der Sägeeinrichtung sind bei solchen Sägeeinrichtungen mit den Merkmalen der Ansprüche 14 und 15 besonders niedrig.

Eine Sägeeinrichtung mit den Merkmalen der Ansprüche 16 und 17 ermöglicht auf einfache Art und Weise die Durchführung aufeinanderfolgender Schnitte mit dem gleichen Winkel.

Durch die Weiterbildungen der Ansprüche 18 und 19 wird die Positioniergenauigkeit des Werkstücks erhöht und die Positionierung erleichtert.

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine Draufsicht auf eine erste Ausführungsform einer Sägeeinrichtung;
- Figur 2: eine perspektivische Darstellung eines Bereichs der Sägeeinrichtung von Figur 1;
- Figur 3: einen Schnitt durch eine Trageinrichtung eines Auflagetisches der Sägeeinrichtung von Figur 1;
- Figur 4: einen Schnitt ähnlich Figur 3 eines zweiten Anschlags der Sägeeinrichtung von Figur 1; und
- Figur 5: eine Draufsicht auf einen Bereich einer zweiten Ausführungsform einer Sägeeinrichtung.

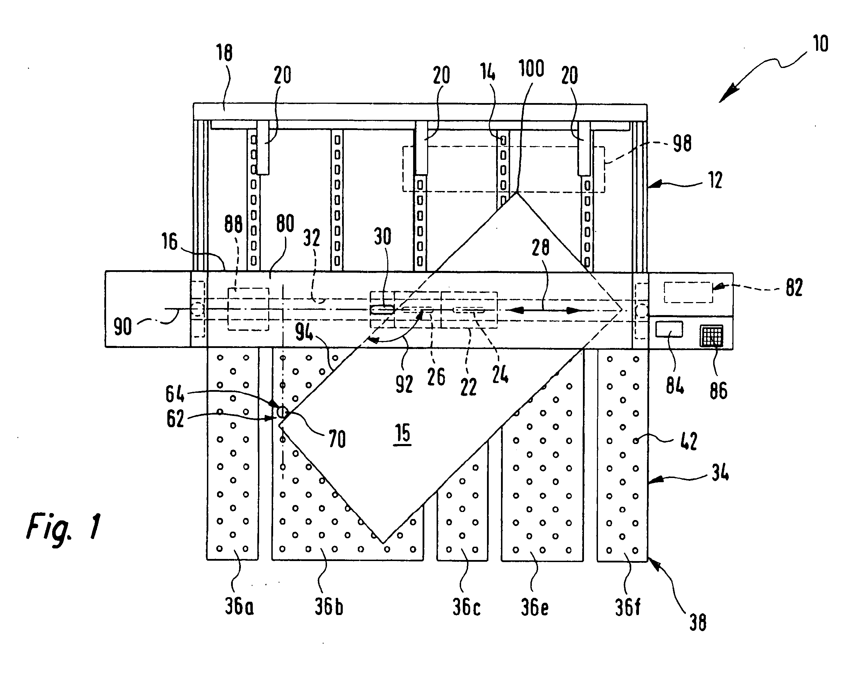

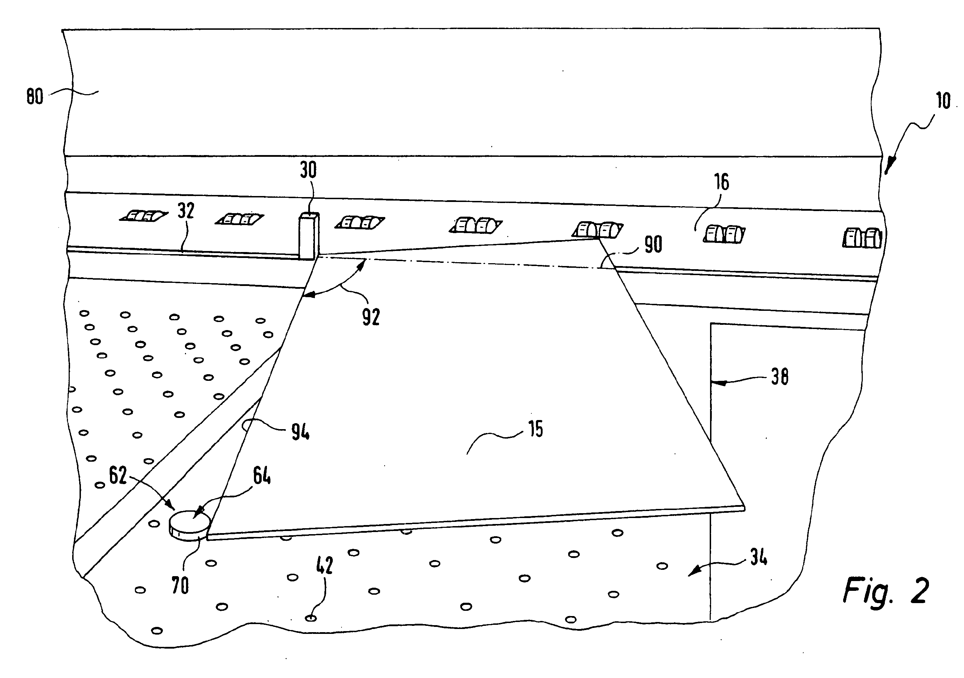

Eine Sägeeinrichtung trägt in den Figuren 1 und 2 insgesamt das Bezugszeichen 10. Sie umfasst einen Zuführtisch 12 mit Rollen 14, durch die ein Werkstück 15 einem Sägetisch 16 zugeführt werden kann. Hierzu verfügt die Sägeeinrichtung 10 über eine Vorschubvorrichtung 18 mit Spannzangen 20.

Der Sägetisch 16 umfasst einen Sägewagen 22 mit einer Vorritzsäge 24 und einer Trennsäge 26. Der Sägewagen 22 ist längs einer Schnittrichtung (Pfeil 28) bewegbar.

Am Sägewagen 22 ist ferner ein erster Anschlag 30 montiert. Dieser ist als längliches Schwert ausgeführt, welches eine in den Figuren 1 und 2 dargestellte Arbeitsstellung aufweist, in der es aus einem Sägespalt 32 über eine Ebene des Sägetisches 16 übersteht. Der erste Anschlag 30 kann jedoch von der Arbeitsstellung in eine Freigabestellung verschwenkt werden, in der er unterhalb der Ebene des Sägetisches 16 positioniert ist. Ähnliches gilt auch für die Vorritzsäge 24 und die Trennsäge 26: auch diese können aus einer Freigabestellung, in der sie unterhalb der Ebene des Sägetisches 16 angeordnet sind, in eine Arbeitsstellung nach oben bewegt werden, in der sie über die Ebene des Sägetisches 16 überstehen.

Auf der vom Zuführtisch 12 abgewandten Seite des Sägetisches 16 ist ein Entnahmetisch 34 angeordnet. Dieser besteht aus mehreren Elementen 36a bis 36f. Die Ebene der Oberseite des Entnahmetisches 34 ist auf gleicher Höhe wie die Ebene der Oberseite des Sägetisches 16 und die Ebene der Oberseite des Zuführtisches 12. Der Zuführtisch 12, der Sägetisch 16 und der Entnahmetisch 34 bilden insgesamt einen Auflagetisch 38. Auf diesen kann das Werkstück 15 aufgelegt werden.

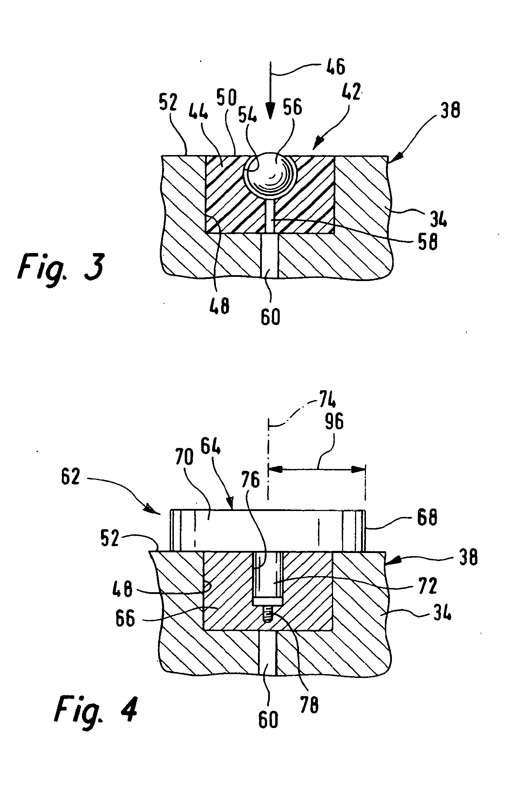

Der Entnahmetisch 34 umfasst eine Vielzahl von identischen Trageinrichtungen 42, von denen aus Gründen der Übersichtlichkeit in den Figuren 1 und 2 jeweils nur eine mit einem Bezugszeichen versehen ist. Eine der Trageinrichtung 42 ist im Detail in in Figur 3 gezeigt: die dort gezeigte Trageinrichtung 42 umfasst ein Adapterstück 44, welches in der Draufsicht (Pfeil 46 in Figur 3) kreiszylindrischen Querschnitt aufweist. Das Adapterstück 44 ist aus Kunststoff und in eine komplementäre Aufnahmeöffnung 48 eingesetzt, die im Auflagetisch 38 vorhanden ist. Die Höhe des Adapterstücks 44 entspricht der Tiefe der Aufnahmeöffnung 48. Eine Oberseite 50 des Adapterstücks 44 ist also bündig mit einer Oberseite 52 des zum Auflagetisch 38 gehörenden Entnahmetisches 34. In dem Adapterstück 44 ist eine Ausnehmung 54 vorhanden, in die eine Kugel 56 mit einem gewissen Spiel eingesetzt ist. Über einen Kanal 58 ist die Ausnehmung 54 mit einer Druckluftzuführung 60 verbunden, die im Entnahmetisch 34 vorhanden ist.

An einer Position 62 (siehe Figuren 1 und 2) wurde die Trageinrichtung 42 entfernt. Statt dessen ist an dieser Stelle ein zweiter Anschlag 64 am Auflagetisch 38 befestigt. Dies ist in Figur 4 dargestellt: der zweite Anschlag 64 verfügt über ein Zwischenstück 66, dessen Außenform gleich ist wie die Außenform des Adapterstücks 44 der Trageinrichtung 42. Das Zwischenstück 66 ist aus Metall hergestellt, beispielsweise aus Messing. Es ist im Passsitz in die Aufnahmeöffnung 48 an der Position 62 eingesetzt.

Der zweite Anschlag 64 umfasst ferner ein Anschlagelement 68, welches einen Anlegeabschnitt 70 und einen mit diesem verbundenen Befestigungsabschnitt 72 aufweist. Der Anlegeabschnitt 70 ist als zylindrische Scheibe ausgeführt mit einer zur Ebene 52 des Auflagetisches 38 rechtwinkligen Zylinderachse 74. Er ist gegenüber dem Befestigungsabschnitt 72 um die Achse 74 drehbar gelagert. Der Befestigungsabschnitt 72 ist als Zapfen ausgebildet, welcher im Passsitz in eine entsprechende Öffnung 76 im Zwischenstück 66 eingesetzt ist. Die Öffnung 76 ist als Sackloch ausgeführt, an dessen Boden ebenfalls als Sackloch eine Gewindebohrung 78 vorhanden ist, welche einen Angreifabschnitt darstellt. Auf dessen Funktion wird weiter unten noch eingegangen werden.

Die Sägeeinrichtung 10 verfügt ferner über einen Druckbalken 80, der oberhalb des Sägetisches 16 angeordnet ist und vertikal bewegt werden kann. Am Druckbalken 80 ist eine Lasereinrichtung 88 angeordnet, welche eine Schnittlinie 90 der beweglichen Säge 26 auf den Sägetisch 16 beziehungsweise das in diesem Bereich liegende Werkstück 15 projiziert. Ferner gehört zu der Sägeeinrichtung 10 eine Steuer- und Regeleinrichtung 82, welche den Betrieb der Sägeeinrichtung 10 steuert und regelt. Teil der Steuer- und Regeleinrichtung 82 sind ein Monitor 84 sowie eine Eingabeeinheit 86.

Die Sägeeinrichtung 10 wird folgendermaßen betrieben: zunächst wird vom Benutzer der Sägeeinrichtung 10 an einer gewünschten Position (in den Figuren 1 und 2 beim Bezugszeichen 62) die dort vorhandene Trageinrichtung 42 aus der Aufnahmeöffnung 48 im Entnahmetisch 34 entfernt. Dann wird an dieser Position 62 zunächst das Zwischenstück 66 eingesetzt, und in dessen Öffnung 76 wird dann das Anschlagelement 68 mit dem zapfenartigen Befestigungsabschnitt 72 eingesetzt. Da dieser axial etwas kürzer ist als die Öffnung 76 lang ist, liegt der zylindrische Anlegeabschnitt 70 bündig auf dem Entnahmetisch 34 auf, wie dies auch in Figur 4 dargestellt ist.

Die einzelnen Aufnahmeöffnungen 48 im Entnahmetisch 34 sind mit Identifikationsnummern versehen. Der Benutzer der Sägeeinrichtung 10 gibt nun die Identifikationsnummer jener Aufnahmeöffnung 48 über die Eingabeeinheit 86 in die Steuer-und Regeleinrichtung 82 ein, in der der zweite Anschlag 64 befestigt ist. Außerdem gibt er einen gewünschten Winkel (Bezugszeichen 92 in den Figuren 1 und 2) ein, den die Schnittlinie 90 des von der Trennsäge 26 durchzuführenden Trennschnittes gegenüber einem Längsrand 94 des Werkstücks 40 haben soll. Denkbar ist natürlich auch, den Winkel auf einen anderen Rand des Werkstücks zu beziehen.

Auf einem Speicher der Steuer- und Regeleinrichtung 82 ist für jede Identifikationsnummer einer Aufnahmeöffnung 48 die entsprechende Position auf dem Auflagetisch 38 beziehungsweise dem Entnahmetisch 34 hinterlegt. Aus der Position 62 der vorliegend gewählten Aufnahmeöffnung 48 auf dem Auflagetisch 38, dem Radius 96 (vgl. Figur 4) des Anlegeabschnitts 70 des zweiten Anschlags 64 und dem gewünschten Winkel 92 berechnet die Steuer-und Regeleinrichtung 82 eine entsprechende Position des ersten Anschlags 30, und die Steuer-und Regeleinrichtung 82 steuert den Sägewagen 22 so an, dass der erste Anschlag 30 parallel zur Schnittlinie 90 in die berechnete Position bewegt wird. Außerdem wird der erste Anschlag 30 von der Steuer-und Regeleinrichtung 82 in seine Arbeitsstellung gebracht.

Nun kann der Benutzer der Sägeeinrichtung 10 das Werkstück 15 mit dem Längsrand 94 in Anlage an den ersten Anschlag 30 und an den zweiten Anschlag 64 bringen. Dieser Längsrand 94 verläuft nun längs einer Tangente an die beiden Anschläge 30 und 64. Gleichzeitig schaltet er die Lasereinrichtung 88 ein, welche die Schnittlinie 90 auf das Werkstück 15 projiziert. Der Benutzer verschiebt nun das Werkstück 15 längs der beiden Anschläge 30 und 64, also parallel besagter Tangente soweit, bis die projizierte Schnittlinie 90 an der gewünschten Stelle am Werkstück 15 liegt.

Dann veranlasst der Benutzer durch eine entsprechende Eingabe an der Steuer- und Regeleinrichtung 82 die Durchführung eines Sägeschnittes: hierzu wird von der Steuer- und Regeleinrichtung 82 zunächst der Druckbalken 80 auf das Werkstück 15 abgesenkt und dieses somit zwischen Druckbalken 80 und Sägetisch 16 verklemmt. Dann wird der erste Anschlag 30 von der Steuer-und Regeleinrichtung 82 von seiner Arbeitsstellung in die Freigabestellung verschwenkt, in der er unterhalb der Ebene des Sägetisches 16 positioniert ist, er also nicht mehr über die Oberseite des Auflagetisches 38 übersteht. Danach werden die Vorritzsäge 24 und die Trennsäge 26 nach oben bewegt und der Sägewagen 22 längs der Schnittrichtung 28 bewegt, wodurch das Werkstück 15 längs der Schnittlinie 90 vorgeritzt und anschließend getrennt wird. Dann wird der Druckbalken 80 von der Steuer-und Regeleinrichtung 82 angehoben, so dass der Benutzer das Werkstück 15 und den abgetrennten Rest aus der Sägeeinrichtung 10 entnehmen kann.

Sollen keine schrägen Schnitte mehr durchgeführt werden, zieht der Benutzer zunächst das Anschlagelement 68 aus dem Zwischenstück 66 heraus. Dann schraubt er ein entsprechendes Werkzeug (nicht dargestellt) in die Gewindebohrung 78 ein und zieht das Zwischenstück 66 aus der Aufnahmeöffnung 48 heraus. Anschließend setzt er die zuvor herausgenommene und zwischengelagerte Trageinrichtung 42 wieder in die Aufnahmeöffnung 48 ein.

Soll ein schräger Schnitt an einem Werkstück 15 durchgeführt werden, welches andere geometrischen Abmessungen aufweist, kann der zweite Anschlag 64 in jede beliebige der Aufnahmeöffnungen 48 eingesetzt werden.

Bei dem oben beschriebenen Ausführungsbeispiel hat die Steuer-und Regeleinrichtung 82 die aktuelle Lage des zweiten Anschlags 64 aufgrund der Identifikationsnummer der entsprechenden Aufnahmeöffnung 48 erkannt. Möglich ist aber auch, dass jeder Aufnahmeöffnung 48, in die der zweite Anschlag 64 eingesetzt werden kann, eine Erfassungseinrichtung zugeordnet ist, welche ein Signal an die Steuer-und Regeleinrichtung übermitteln kann, aus dem diese die aktuelle Lage des zweiten Anschlags 64 ermitteln kann.

Ferner wurden bei dem obigen Ausführungsbeispiel für die Positionierung des zweiten Anschlags 64 jene Aufnahmeöffnungen 48 verwendet, die "normalerweise" für die Aufnahme der Trageinrichtungen 42 vorgesehen sind. Es versteht sich, dass bei einer nicht gezeigten Ausführungsform auch spezielle Aufnahmeöffnungen für die Positionierung des zweiten Anschlags vorhanden sein können, so dass zuvor eine Trageinrichtung 42 nicht extra entfernt werden muss.

In Figur 1 ist außerdem eine zusätzliche Variante gestrichelt gezeichnet: Bei dieser verfügt die Sägeeinrichtung 10 über einen Zusatzanschlag 98 in Form eines einfachen Bretts, welches zwischen den Spannzangen 20 der Vorschubvorrichtung 18 verklemmt ist. An diesem Zusatzanschlag 98 kann zusätzlich ein zur Vorschubvorrichtung 18 zeigendes Eck 100 des Werkstücks 15 angelegt werden, was die Genauigkeit der Positionierung des Werkstücks 15 verbessert.

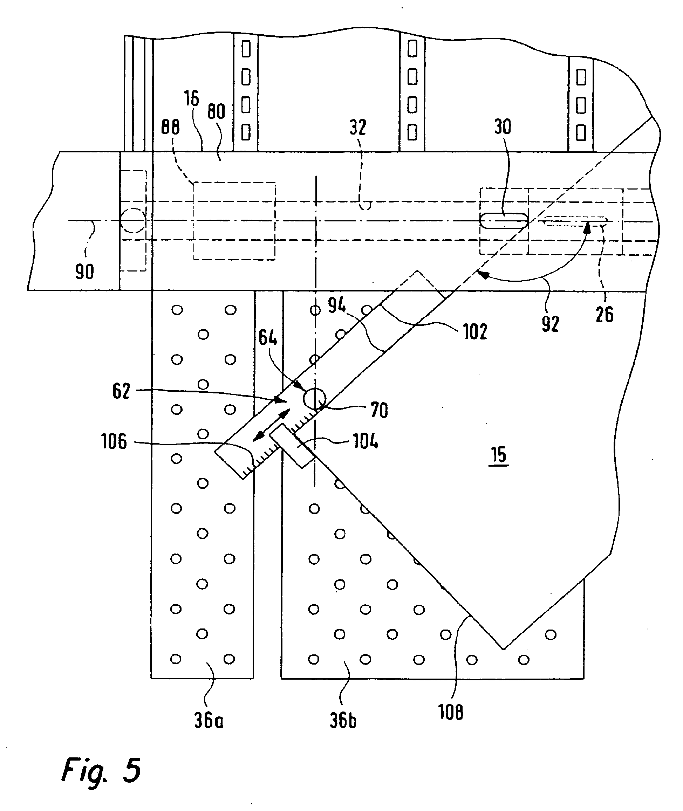

Eine alternative Ausführungsform ist ferner in Figur 5 dargestellt. Dabei gilt, dass solche Elemente und Bereiche, die äquivalente Funktionen zu vorab beschriebenen Elementen und Bereichen aufweisen, die gleichen Bezugszeichen tragen und nicht nochmals im Detail erläutert sind.

Man erkennt aus Figur 5, dass der dortige zweite Anschlag 64 eine Anlegeschiene 102 umfasst, an der der Längsrand 94 des Werkstücks 15 anliegt. Auf der Anlegeschiene 102 ist ein verschiebbares Positionseinstellelement 104 montiert, welches mit einer Längenskala 106 auf der Anlegeschiene 102 zusammenarbeitet, und an dem ein hinterer Rand 108 des Werkstücks 15 anliegt. Dies gestattet es, aufeinanderfolgend mehrere Schnitte mit gleichem Winkel durchzuführen und zwischen den einzelnen Schnitten das Werkstück 15 um eine präzise, an der Längenskala 106 ablesbare und durch das Positionseinstellelement 104 vorgebbare Distanz zu verschieben. Die Anlegeschiene 102 kann entweder als separates Teil ausgebildet sein, welches auf geeignete und lösbare Art und Weise mit dem Anschlagelement 68 verbunden werden kann, oder die Anlegeschiene ist integraler Bestandteil des Anschlagelements, bildet also dieses.

## Patentansprüche

1. Sägeeinrichtung (10) zum Aufteilen plattenförmiger Werkstücke (15), mit einem Auflagetisch (38), einer längs einer Schnittrichtung (28) beweglichen Säge (26), einem ersten, parallel zur Schnittrichtung (28) beweglichen Anschlag (30), der wenigstens in einer Arbeitsstellung über eine Ebene des Auflagetisches (38) übersteht, und einem zweiten Anschlag (64), der zusammen mit dem ersten Anschlag (30) eine Positionierung des Werkstücks (15) zur Durchführung eines schräg verlaufenden Schnitts ermöglicht, wobei der zweite Anschlag (64) am Auflagetisch (38) befestigt und als separates Teil ausgebildet ist, welches in mindestens eine Aufnahmeöffnung (48) im Auflagetisch (38) wenigstens mittelbar einsetzbar und aus dieser entnehmbar ist, **dadurch gekennzeichnet, dass** der Auflagetisch (38) eine Vielzahl von solchen Aufnahmeöffnungen (48) umfasst.

2. Sägeeinrichtung (10) nach Anspruch 1, **dadurch gekennzeichnet, dass** der zweite Anschlag (64) einen zylindrischen Anlegeabschnitt (70) mit zur Ebene des Auflagetisches (38) wenigstens in etwa rechtwinkliger Zylinderachse (74) umfasst.

3. Sägeeinrichtung (10) nach Anspruch 2, **dadurch gekennzeichnet, dass** der zweite Anschlag (64) einen mit dem Anlegeabschnitt (70) verbundenen Befestigungsabschnitt (72) umfasst, der wenigstens mittelbar in der Aufnahmeöffnung (48) im Passsitz befestigt ist.

4. Sägeeinrichtung (10) nach Anspruch 3, **dadurch gekennzeichnet, dass** der Befestigungsabschnitt (72) in eine Öffnung (78) in einem Zwischenstück (66) im Passsitz einsetzbar ist, welches in die Aufnahmeöffnung (48) im Passsitz einsetzbar ist.

5. Sägeeinrichtung (10) nach Anspruch 4, **dadurch gekennzeichnet, dass** das Zwischenstück (66) einen Angreifabschnitt (78) umfasst, an dem zum Entnehmen des Zwischenstücks (66) aus der Aufnahmeöffnung (48) ein Werkzeug angreifen kann.

6. Sägeeinrichtung (10) nach einem der Ansprüche 2 bis 5, **dadurch gekennzeichnet, dass** der Anlegeabschnitt um eine zur Ebene des Auflagetisches wenigstens in etwa rechtwinklige Achse drehbar ist.

7. Sägeeinrichtung (10) nach einem der vorhergehenden Ansprüche, **dadurch gekennzeichnet, dass** in die Aufnahmeöffnungen (48) wahlweise der zweite Anschlag (64) oder eine Trageinrichtung (42), die das Werkstück (15) auf dem Auflagetisch (38) trägt, wenigstens mittelbar einsetzbar ist.

8. Sägeeinrichtung (10) nach Anspruch 7, **dadurch gekennzeichnet, dass** die Trageinrichtung (42) ein Kugel- und/oder Luftkissenlager umfasst.

9. Sägeeinrichtung (10) nach einem der vorhergehenden Ansprüche, **dadurch gekennzeichnet, dass** sie eine Steuer- und/oder Regeleinrichtung (82) umfasst, welche unter Berücksichtigung der aktuellen Position des zweiten Anschlags (64) den ersten Anschlag (30) so positioniert, dass eine gleichzeitig am ersten Anschlag (30) und am zweiten Anschlag (64) anliegende Tangente gegenüber der Schnittrichtung (28) wenigstens in etwa einen gewünschten Winkel (92) aufweist.

10. Sägeeinrichtung (10) nach Anspruch 9, **dadurch gekennzeichnet, dass** mindestens einige Aufnahmeöffnungen (48) mit einer Identifikationsnummer versehen sind und die Steuer und/oder Regeleinrichtung (82) so programmiert ist, dass sie aus der Identifikationsnummer einer Aufnahmeöffnung (48) deren Position bzw. die Lage des zweiten Anschlags (64) ermitteln kann.

11. Sägeeinrichtung (10) nach einem der Ansprüche 9 oder 10, **dadurch gekennzeichnet, dass** jeder Aufnahmeöffnung (48), in die der zweite Anschlag (64) einsetzbar ist, eine Erfassungseinrichtung zugeordnet ist, welche ein Signal an die Steuer- und/oder Regeleinrichtung (82) übermitteln kann, aus dem diese die aktuelle Lage des zweiten Anschlags (64) ermitteln kann.

12. Sägeeinrichtung (10) nach einem der vorhergehenden Ansprüche, **dadurch gekennzeichnet, dass** sie eine Lasereinrichtung (88) umfasst, welche eine Schnittlinie (90) der beweglichen Säge (26) auf das Werkstück (15) projiziert.

13. Sägeeinrichtung (10) nach einem der vorhergehenden Ansprüche, **dadurch gekennzeichnet, dass** der erste Anschlag (30) in eine Freigabestellung bringbar ist, in der er unterhalb der Ebene (52) des Auflagetisches (38) positioniert ist.

14. Sägeeinrichtung (10) nach einem der vorhergehenden Ansprüche, **dadurch gekennzeichnet, dass** der erste Anschlag (30) an einem längs der Sägerichtung (28) beweglichen Wagen (22) befestigt ist.

15. Sägeeinrichtung (10) nach Anspruch 14, **dadurch gekennzeichnet, dass** der erste Anschlag (30) und die Säge (26) an einem gemeinsamen Wagen (22) befestigt sind.

16. Sägeeinrichtung (10) nach einem der vorhergehenden Ansprüche, **dadurch gekennzeichnet, dass** der zweite Anschlag (64) eine Anlegeschiene (102) umfasst.

17. Sägeeinrichtung (10) nach Anspruch 16, **dadurch gekennzeichnet, dass** der zweite Anschlag (64) ein Positionseinstellelement (104) umfasst, welches auf der Anlegeschiene (102) verschiebbar angeordnet ist.

18. Sägeeinrichtung (10) nach einem der vorhergehenden Ansprüche, **dadurch gekennzeichnet, dass** sie einen Zusatzanschlag (98) umfasst, der mit einer Vorschubvorrichtung (18) verbunden ist und an dem ein Eck (100) des Werkstücks (15) anlegbar ist.

19. Sägeeinrichtung (10) nach Anspruch 18, **dadurch gekennzeichnet, dass** der Zusatzanschlag (98) brettartig ausgebildet und von mindestens einer Spannzange (20) der Vorschubvorrichtung (18) greifbar ist.

## Claims

1. A sawing device (10) for splitting apart slablike workpieces (15), having a supporting table (38), a saw (26) that is movable in a cutting direction (28), a first stop (30) which is movable parallel to the cutting direction (28) and which in at least one working position protrudes past the plane of the supporting table (38), and a second stop (64), which together with the first stop (30) enables positioning the workpiece (15) for performing an obliquely extending cut, the second stop (64) being fastened to the supporting table (38) and being embodied as a separate part which can be inserted into and removed from at least one receiving opening (48) in the supporting table (38), **characterized in that** the supporting table (38) includes many such receiving openings (48).

2. The sawing device (10) of claim 1, **characterized in that** the second stop (64) includes a cylindrical guide portion (70), with a cylinder axis (74) that is at least approximately perpendicular to the plane of the supporting table (38).

3. The sawing device (10) of claim 2, **characterized in that** the second stop (64) includes a securing portion (72) which is connected to the guide portion (70) and is fastened at least indirectly in a press fit in the receiving opening (48).

4. The sawing device (10) of claim 3, **characterized in that** the securing portion (72) can be inserted in a press fit into an opening (78) in an adapter piece (66) that can be inserted in a press fit into the receiving opening (48).

5. The sawing device (10) of claim 4, **characterized in that** the adapter piece (66) includes an engagement portion (78) which a tool can engage for removing the adapter piece (66) from the receiving opening (48).

6. The sawing device (10) of one of claims 2-5, **characterized in that** the guide portion is rotatable about an axis that is at least approximately perpendicular to the plane of the supporting table.

7. The sawing device (10) of one of the foregoing claims, **characterized in that** selectively, either the second stop (64) or a carrier device (42) which carries the workpiece (15) on the supporting table (38) can be inserted at least indirectly into the receiving openings (48).

8. The sawing device (10) of claim 7, **characterized in that** the carrier device (42) includes a ball bearing and/or air cushion bearing.

9. The sawing device (10) of one of the foregoing claims, **characterized in that** it includes a control and/or regulating device (82), which taking the current position of the second stop (64) into account positions the first stop (30) such that a tangent that is simultaneously in contact with the first stop (30) and the second stop (64) is approximately at a desired angle (92) relative to the cutting direction (28).

10. The sawing device (10) of claim 9, **characterized in that** at least some receiving openings (48) are provided with an identification number, and the control and/or regulating device (82) is programmed such that from the identification number of a receiving opening (48) it can ascertain the position of that opening or the location of the second stop (64).

11. The sawing device (10) of one of claims 9 or 10, **characterized in that** each receiving opening (48) into which the second stop (64) can be inserted is assigned a detection device that can send a signal to the control and/or regulating device (82), from which signal the current location of the second stop (64) can be ascertained.

12. The sawing device (10) of one of the foregoing claims, **characterized in that** it includes a laser device (88), which projects a cutting line (90) of the movable saw (26) onto the workpiece (15).

13. The sawing device (10) of one of the foregoing claims, **characterized in that** the first stop (30) can be put into a release position, in which it is positioned below the plane (52) of the supporting table (38).

14. The sawing device (10) of one of the foregoing claims, **characterized in that** the first stop (30) is fastened to a carriage (22) that is movable along the sawing direction (28).

15. The sawing device (10) of claim 14, **characterized in that** the first stop (30) and the saw (26) are fastened to the same carriage (22).

16. The sawing device (10) of one of the foregoing claims, **characterized in that** the second stop (64) includes a guide rail (102).

17. The sawing device (10) of claim 16, **characterized in that** the second stop (64) includes a position-adjusting element (104), which is disposed displaceably on the guide rail (102).

18. The sawing device (10) of one of the foregoing claims, **characterized in that** it includes an additional stop (98), which is connected to a feed device (18) and on which a corner (100) of the workpiece (15) can be placed.

19. The sawing device (10) of claim 18, **characterized in that** the additional stop (98) is embodied in boardlike fashion and can be grasped by at least one chuck (20) of the feed device (18).

## Revendications

1. Dispositif de sciage (10) destiné à diviser des pièces (15) en forme de plaque, comprenant une table porte-pièce (38), une scie (26) mobile le long d'un sens de coupe (28), une première butée (30) mobile parallèlement au sens de coupe (28) et faisant saillie, au moins dans une position de travail, d'un plan de la table porte-pièce (38), et une seconde butée (64) permettant, conjointement avec la première butée (30), un positionnement de la pièce (15) pour mettre en oeuvre une coupe s'étendant de manière oblique, la seconde butée (64) étant fixée sur la table porte-pièce (38) et étant conçue comme une pièce séparée pouvant être insérée au moins indirectement dans au moins une ouverture de logement (48) dans la table porte-pièce (38) et pouvant en être retirée, **caractérisé en ce que** la table porte-pièce (38) comprend une pluralité d'ouvertures de logement (48) de ce type.

2. Dispositif de sciage (10) selon la revendication 1, **caractérisé en ce que** la seconde butée (64) comprend une partie d'appui cylindrique (70) dotée d'un axe de cylindre (74) au moins sensiblement perpendiculaire au plan de la table porte-pièce (38).

3. Dispositif de sciage (10) selon la revendication 2, **caractérisé en ce que** la seconde butée (64) comprend une partie de fixation (72) reliée à la partie d'appui (70) et fixée au moins indirectement dans l'ouverture de logement (48) en ajustement fin.

4. Dispositif de sciage (10) selon la revendication 3, **caractérisé en ce que** la partie de fixation (72) peut être insérée dans une ouverture (78) dans une pièce intermédiaire (66) en ajustement fin, ladite pièce pouvant être insérée dans l'ouverture de logement (48) en ajustement fin.

5. Dispositif de sciage (10) selon la revendication 4, **caractérisé en ce que** la pièce intermédiaire (66) comprend une partie de préhension (78) contre laquelle un outil peut s'appliquer pour retirer la pièce intermédiaire (66) de l'ouverture de logement (48).

6. Dispositif de sciage (10) selon l'une quelconque des revendications 2 à 5, **caractérisé en ce que** la partie d'appui peut être tournée autour d'un axe au moins sensiblement perpendiculaire au plan de la table porte-pièce.

7. Dispositif de sciage (10) selon l'une quelconque des revendications précédentes, **caractérisé en ce que** la seconde butée (64) ou un dispositif de support (42) portant la pièce (15) sur la table porte-pièce (38) peuvent être insérés au moins indirectement dans les ouvertures de logement (48).

8. Dispositif de sciage (10) selon la revendication 7, **caractérisé en ce que** le dispositif de support (42) comprend un roulement à billes et/ou un palier à coussin d'air.

9. Dispositif de sciage (10) selon l'une quelconque des revendications précédentes, **caractérisé en ce qu'**il comprend un dispositif de commande et/ou de régulation (82) positionnant la première butée (30) en tenant compte de la position actuelle de la seconde butée (64), si bien qu'une tangente, reposant simultanément contre la première butée (30) et contre la seconde butée (64), forme au moins sensiblement un angle (92) souhaité par rapport à la direction de coupe (28).

10. Dispositif de sciage (10) selon la revendication 9, **caractérisé en ce qu'**au moins certaines des ouvertures de logement (48) sont pourvues d'un numéro d'identification et le dispositif de commande et/ou de régulation (82) est programmé de manière à pouvoir déterminer, à partir du numéro d'identification d'une ouverture de logement (48), la position de ladite ouverture ou la position de la seconde butée (64).

11. Dispositif de sciage (10) selon l'une quelconque des revendications 9 ou 10, **caractérisé en ce qu'**à chaque ouverture de logement (48), dans laquelle la seconde butée (64) peut être insérée, est associé un dispositif de détection pouvant transmettre un signal au dispositif de commande et/ou de régulation (82) et déduire de ce signal la position actuelle de la seconde butée (64).

12. Dispositif de sciage (10) selon l'une quelconque des revendications précédentes, **caractérisé en ce qu'**il comprend un dispositif laser (88) projetant une ligne de coupe (90) de la scie mobile (26) sur la pièce (15).

13. Dispositif de sciage (10) selon l'une quelconque des revendications précédentes, **caractérisé en ce que** la première butée (30) peut être amenée dans une position de libération, dans laquelle elle est positionnée sous le plan (52) de la table porte-pièce (38).

14. Dispositif de sciage (10) selon l'une quelconque des revendications précédentes, **caractérisé en ce que** la première butée (30) est fixée contre un chariot (22) mobile le long de la direction de sciage (28).

15. Dispositif de sciage (10) selon la revendication 14, **caractérisé en ce que** la première butée (30) et la scie (26) sont fixées sur un chariot commun (22).

16. Dispositif de sciage (10) selon l'une quelconque des revendications précédentes, **caractérisé en ce que** la seconde butée (64) comprend un rail d'appui (102).

17. Dispositif de sciage (10) selon la revendication 16, **caractérisé en ce que** la seconde butée (64) comprend un élément de réglage de position (104) monté mobile sur le rail d'appui (102).

18. Dispositif de sciage (10) selon l'une quelconque des revendications précédentes, **caractérisé en ce qu'**il comprend une butée supplémentaire (98) reliée à un dispositif d'avancement (18) et contre lequel un coin (100) de la pièce (15) peut être en appui.

19. Dispositif de sciage (10) selon la revendication 18, **caractérisé en ce que** la butée supplémentaire (98) est conçue à la façon d'une planche et peut être saisie par au moins une pince de serrage (20) du dispositif d'avancement (18).
